(19) Europäisches Patentamt
European Patent Office
Office européen des brevets

(11) **EP 2 881 869 A1**

(12) **EUROPEAN PATENT APPLICATION**

(43) Date of publication:
**10.06.2015 Bulletin 2015/24**

(51) Int Cl.:
***G06F 17/30*** *(2006.01)*

(21) Application number: **14191758.3**

(22) Date of filing: **04.11.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.12.2013 KR 20130151449**

(71) Applicant: **Samsung Electronics Co., Ltd
Gyeonggi-do 443-742 (KR)**

(72) Inventors:
• **Son, Ji-hye
Incheon (KR)**
• **Kim, Do-wan
Gyeonggi-do (KR)**

(74) Representative: **Appleyard Lees
15 Clare Road
Halifax HX1 2HY (GB)**

(54) **Display apparatus, display system and search result providing methods of the same**

(57)    The display apparatus includes a display; a user input to receive a user input; and a controller to transmit a search query input through the user input to the server, to classify search result data on the search query received from the server into a plurality of categories based on a content type and to display the search result data on the display according to the classified categories, wherein the controller determines at least one of a display order of the classified categories and a number of displayed search results of each category based on a relevance to a content currently displayed on the display.

## FIG. 2

EP 2 881 869 A1

**Description**

BACKGROUND

**1. Field**

Apparatuses and methods consistent with exemplary embodiments relate to providing search results on a display apparatus.

**2. Description of the Related Art**

With the advancement of telecommunication industry, a display apparatus, such as a digital television (TV), is evolving into an intelligent device with multiple functions including Internet communication and information search features in addition to its basic functions.

For example, a smart TV, which is connected to an external service providing server or site through a network to receive multimedia content including video/audio data and packet data, provides a related art function of extracting an electronic program guide (EPG) from a broadcast signal to display the EPG and also provides various other functions, for instance, video on demand (VOD) service, personal relation or connection management and information sharing through a social network service (SNS) such as Twitter and Facebook, information search through a web browser such as Google and Naver, and information retrieval using a search function of an operating system (OS) such as an unified search.

In the unified search, the smart TV transmits a search query input by a user to a server managed by a TV manufacturer and/or a content provider, and receives and displays search result data retrieved by the server on a display.

The search result data is displayed as transmitted from the server, or is classified into categories based on a predetermined search range, for example, recorded TV broadcasts, contents connected to a shared application such as AllShare, and content sources such as a web browser, a visited page and YouTube, and displayed along with a count of search results.

However, only a part of the search results is displayed on the display based on a retrieved result, and the classified categories are displayed according to a set order of the predetermined search scope.

Thus, to determine desired information or content from the displayed search results data, the user has inconvenience of checking displayed search results separately or opening each individual classified category and examining search results in each category.

Moreover, since search results are displayed only with titles and creation dates merely in order of higher search accuracy without considering a current viewing situation of the user, popularity, and/or recency of content, the user needs to determine the desired content based on the search accuracy, the titles and the creation dates of the displayed search results. As a result, the user may often make a mistake of choosing and implementing undesired content from search results before the user succeeds in finding the desired content.

Therefore, there is a need for apparatuses or methods for easily finding the desired content without user's inconvenience of investigating the displayed search results separately or opening each individual classified category and examining the search results in each category and choosing and implementing the undesired content from the search results.

SUMMARY

Exemplary embodiments may address at least the above problems and/or disadvantages and other disadvantages not described above. The exemplary embodiments are not required to overcome the disadvantages described above, and may not overcome any of the problems described above.

One or more exemplary embodiments provide a display apparatus, a display system and search result providing methods of the same that when search result data on a search query input by a user is displayed on a display, classify the search result data into a plurality of categories based on a content type, determines a display order of the classified categories and/or a number of displayed search results of each category based on a relevance to a content currently displayed on the display, and displays search results of each category based on the determined result, thereby enabling the user to easily find desired content.

According to an aspect of an exemplary embodiment, there is provided a display apparatus including: a display to display an image; a communicator to communicate with a server; a user input to receive a user input; and a controller to transmit a search query input through the user input to the server through the communicator, to classify search result data on the search query received from the server into a plurality of categories based on a content type and to display the search result data on the display according to the classified categories, wherein the controller determines at least one of a display order of the classified categories and a number of displayed search results of each category based on a relevance to a content currently displayed on the display.

The user input may include at least one of a microphone to input a voice of a user and a remote controller to receive a remote control signal corresponding to a key input by the user.

The categories may include at least two of a broadcast, a game, a movie, an animation, music, a video, a picture, an application, a website, a web document and news.

The controller may control the display to display a category related to the content currently displayed on the display among the categories on top and to display search results of the category related to the content currently displayed on the display as many as a first percentage (%) of a total number of search results preset to be displayed on the display.

The controller may control the display to display remaining categories in order of higher ratio of search results thereof to a total number of search results of the search result data, and to display search results of the remaining categories as many as a second percentage (%) of the total number of search results preset to be displayed on the display, the second percentage being obtained by equally dividing a remaining percentage (%)of the total number of search results preset to be displayed on the display. The first percentage may be set to higher than the second percentage.

The controller may determine a display order of the search results of the remaining categories based on a display determining parameter to display the search results. The display determining parameter may include at least one of popularity and recency.

In this case, the controller may determine the display order based on a display order determining score (K) calculated a following equation considering the popularity and the recency as the display determining parameter:

$$K = \frac{(D \times \alpha) + (\frac{W}{7} \times \beta) + (\frac{M}{30} \times \gamma)}{A - B}$$ (here, α>β>γ)

where D is a total number of daily clicks on each search result,
$\alpha$ is a daily weighting,
W is a total number of weekly clicks on each search result,
$\beta$ is a weekly weighting,
M is a total number of monthly clicks on each search result,
$\gamma$ is a monthly weighting,
A is a number of applied click types, and
B is a number of unapplied click types.

When a number of search results of a category is smaller than an allocated number of search results for the category to be displayed on the display, the controller may divide an insufficient number of search results for the category by a ratio of search results of each of other categories in number to calculate an allocation for each of other categories and further assign the allocation for each of other categories thereto to display search results on the display.

According to an aspect of an exemplary embodiment, there is provided a search result providing method of a display apparatus, the method including: inputting a search query of a user; transmitting the input search query to a server; and classifying search result data on the search query received from the server into a plurality of categories based on a content type and displaying the search result data according to the classified categories, wherein the displaying includes determining at least one of a display order of the classified categories and a number of displayed search results of each category based on a relevance to a content currently displayed.

The inputting may include at least one of inputting a voice of the user and receiving a key input signal by the user.

The displaying may include displaying a category related to the content currently displayed among the categories on top, and displaying search results of the category related to the content currently displayed as many as a first percentage (%) of a total number of search results preset to be displayed.

The displaying may further include displaying remaining categories in order of higher ratio of search results thereof to a total number of search results of the search result data, and displaying search results of the remaining categories as many as a second percentage (%) of the total number of search results preset to be displayed, the second percentage being obtained by equally dividing a remaining percentage (%) of the total number of search results preset to be displayed on the display. The first percentage may be set to higher than the second percentage.

The displaying may further include determining a display order of the search results of the remaining categories based on a display determining parameter and displaying the search results. The display determining parameter may include at least one of popularity and recency.

When a number of search results of a category is smaller than an allocated number of search results for the category to be displayed, the displaying may include dividing an insufficient number of search results by a ratio of search results of each of other categories in number to calculate an allocation for each of other categories and further assigning the allocation for each of other categories thereto to display search results on the display.

According to an aspect of an exemplary embodiment, there is provided a display system including: a server including a metadata database to store metadata on various kinds of content and a first controller to retrieve data corresponding a search query of a user from the metadata database based on the search query; and a display apparatus including a display to display an image based on an image signal, a communicator to communicate with the server, and a second controller to transmit the search query of the user to the server through the communicator, to classify search result data received from the server into a plurality of categories based on a content type and to display the search result data on the display according to the classified categories, wherein the second controller of the display apparatus determines at least one of a display order of the classified categories and a number of displayed search results of each category based on a relevance to a content currently displayed on the display.

According to an aspect of an exemplary embodiment, there is provided a search result providing method of a display system, the method including: inputting a search query of a user; transmitting the input search query to a server; retrieving data corresponding to the search query and transmitting search result data to the display apparatus; and classifying the search result data into a plurality of categories based on a content type and displaying the search result data according to the classified categories, wherein the displaying includes determining at least one of a display order of the classified categories and a number of displayed search results of each category based on a relevance to a content currently displayed.

BRIEF DESCRIPTION OF THE DRAWINGS

The above and/or other aspects will become more apparent by describing certain exemplary embodiments with reference to the accompanying drawings, in which:

FIG. 1 is a block diagram illustrating a display system including a display apparatus and an information providing server according to an exemplary embodiment.
FIG. 2 is a block diagram illustrating a configuration of the display apparatus shown in FIG. 1.
FIG. 3 is a block diagram illustrating a configuration of the information providing server shown in FIG. 1.
FIG. 4 is a flowchart illustrating a search result providing process of the display system according to an exemplary embodiment.

DETAILED DESCRIPTION OF EXEMPLARY EMBODIMENTS

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Well-known functions or constructions are not described in detail since they would obscure the application with unnecessary detail.

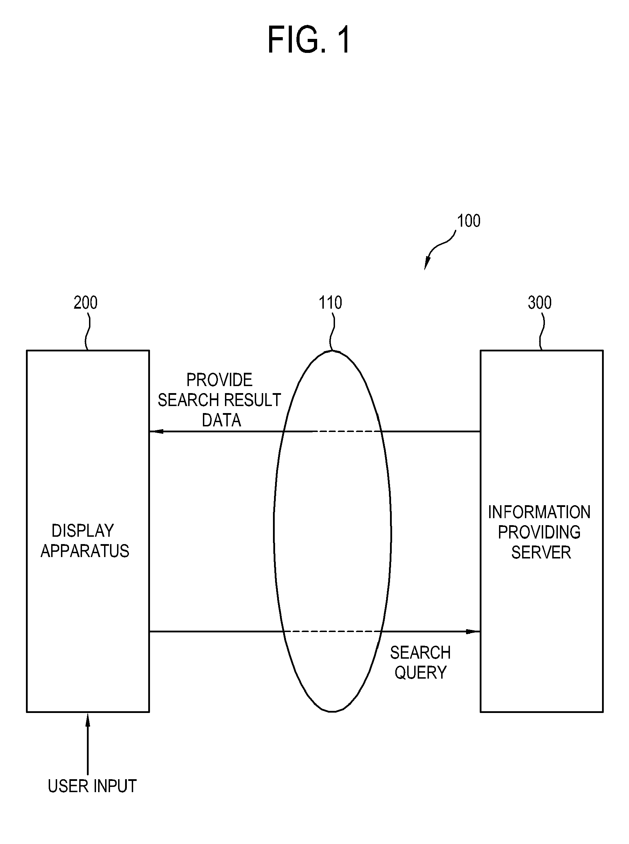

FIG. 1 is a block diagram illustrating a display system 100 including a display apparatus 200 and an information providing server 300 according to an exemplary embodiment.

In the present exemplary embodiment, the display apparatus 200 and the information providing server 300 are connected to each other via a network 110.

The network 110 includes a device or infrastructure used for the display apparatus 200 and the information providing server 300 to conduct communications to exchange information on user inputs or information providing services and may be a wire-based and/or wireless network such as the Internet.

The display apparatus 200 is a device displaying externally received content on a display panel and may be configured as any type, for instance, a smart TV and an Internet Protocol TV (IPTV).

The display apparatus 200 has a wire-based/wireless communication function and thus may receive content and receive, install and implement an application, from an external device, such as the information providing server 300, through the network 110. The content refers to any type of information to be displayed, reproduced or realized on the display apparatus 100, for instance, at least one of a broadcast signal, a text, a video, a picture, a movie, music, a game, an application, a website, a web document, and news. The application refers to a general application program to reproduce and edit content and to perform a function, such as a game, a navigation system, an electronic dictionary and a social network service (SNS). The display apparatus 200 may include an operating system (OS), such as Window, Linux, Android and Bada, to perform an application.

In the following description, the display apparatus 200 includes a smart TV.

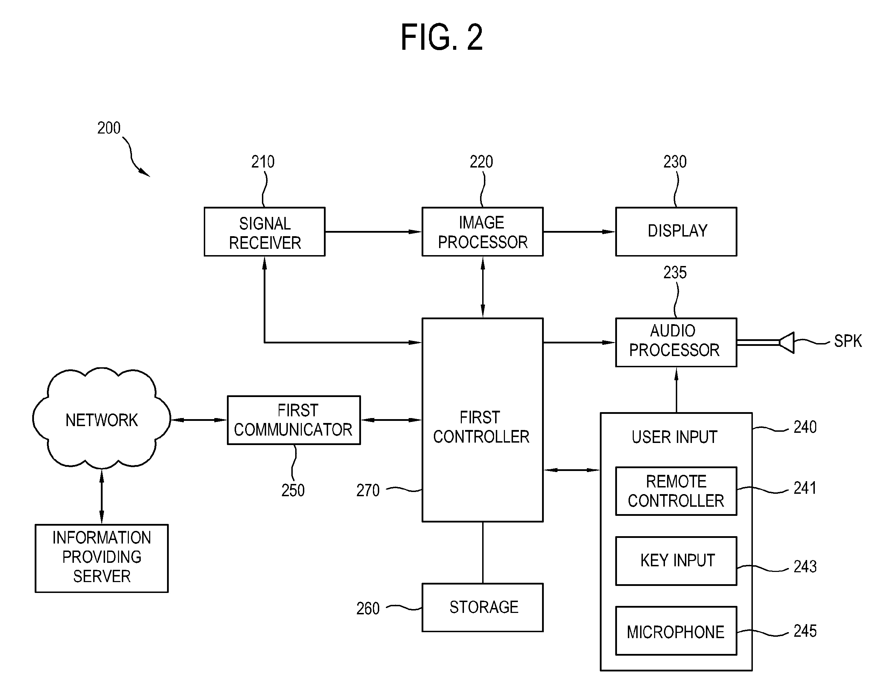

Referring to FIG. 2, the display apparatus 200 includes a signal receiver 210, an image processor 220, a display 230, an audio processor 235, a user input 240, a first communicator 250, a storage 260 and a first controller 270.

The signal receiver 210 may receive an image signal included in a broadcast signal transmitted from a broadcast signal transmitting device (not shown), receive an image signal from an imaging device, such as a DVD player and a BD player, receive an image signal from a PC, receive an image signal through a network, such as the Internet, and/or receive image content stored in a storage medium, such as a USB storage medium, as an image signal.

The image processor 220 processes an image signal received by the signal receiver 210 to display an image. The image processor 220 may perform decoding, image enhancing or scaling functions.

The display 230 displays an image based on an image signal processed by the image processor 220. The display 230 may display an image by any method and include a display panel (not shown) to display an image, such as a liquid crystal display (LCD), a plasma display panel (PDP), and an organic light emitting diode (OLED), and a panel driver (not shown) to perform timing control to display an image signal on the display panel.

The audio processor 235 processes an audio signal of a broadcast signal received by the signal receiver 210 and outputs the audio signal to a speaker SPK according to control by the first controller 270.

The audio processor 235 modulates an audio signal input from a microphone of a microphone 245 into audio data, and demodulates audio data input from the first communicator 250 and audio data stored in the storage 260 into audio signals to output the audio signals as a voice through the speaker SPK according to control by the first controller 270.

The user input 240 receives a user instruction. The user instruction includes information for the display apparatus 200 to determine performing a preset operation by an action of a user. The preset operation may include an operation of controlling a basic function of the display apparatus 200, for example, power on/off and volume control operations, and an operation of inputting diverse executive commands and settings needed for implementing firmware or an OS stored in the storage 260 and a search function. The user instruction may include a remote control signal input through manipulation of a remote controller 241, a key signal input through a key input 243 and a voice command signal input through the microphone 245.

The remote controller 241 includes a remote part (not shown) including input keys or buttons, such as up, down, right and left buttons, an enter button and number buttons. A remote control signal receiver (not shown) receives a remote control signal including key input information corresponding to a key input by the user from the remote part and transmits the remote control signal to the first controller 270. The remote control signal includes a signal for implementing the firmware or OS stored in the storage 260 or a unified search function of an application-specific integrated circuit (ASIC). The first controller 270 controls a corresponding function and/or a corresponding element in response to a remote control signal.

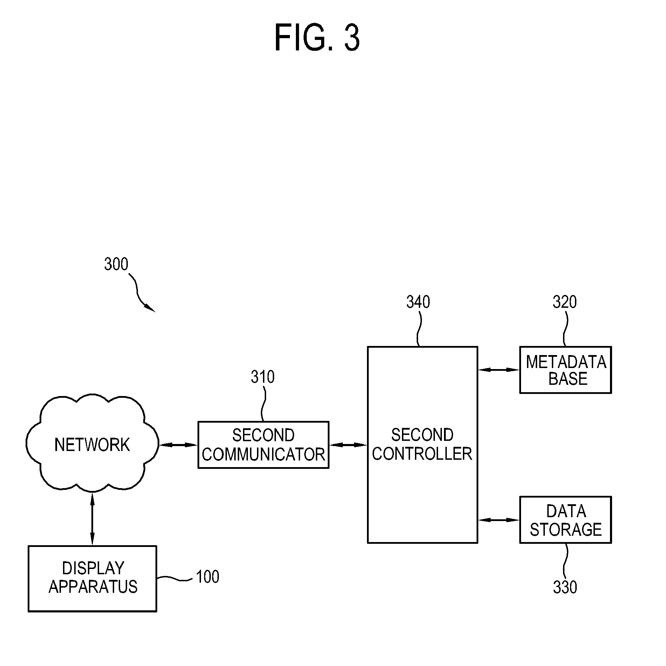

Further, the remote controller 241 may input a search word through a virtual pad displayed on the display 230 when the unified search function of the OS or the ASIC is executed. In this case, the first controller 270 displays a search word corresponding to a remote control signal input through the virtual pad on the display 230 and simultaneously transmits a search query about the search word to the information providing server 300 through the first communicator 250. The information providing server 300 retrieves data corresponding to the search word through a search algorithm from a metadata database 320 (FIG. 3), based on the search word received from the display apparatus 200 and transmits search result data to the display apparatus 200. The search algorithm may include a search algorithm known to those skilled in the art. The search result data includes information on a title, a creation date, a web address and a click count by date of content and may be used to determine search results to be displayed on the display 230 by a second controller 340 (FIG. 3).

The key input 243 may include input keys or buttons formed on a lower side of the display 230 or may include physical buttons and keys. The key input 243 generates a key signal related to control of a function of the display apparatus 200 based on a user input through an input key or button and transmits the key signal to the first controller 270. The key signal includes power on/off signals, a volume control signal, or the like. The first controller 270 controls a corresponding function and/or corresponding element in response to a key signal input through the key input 243.

The microphone 245 includes the microphone to convert a voice into an electric signal. The microphone converts a voice of the user into an electric signal and transmits the electric signal to the first controller 270. The first controller 270 compares an audio signal transmitted from the microphone with voice command information stored in the storage 260, determines that if an equivalent voice command is present, a corresponding voice command signal is input and controls a corresponding function and/or corresponding element.

The microphone 243 may input a search word with a voice by activating a microphone icon displayed on the display 230 when the unified search function of the OS or the ASIC is executed. In this case, the first controller 270 transmits an audio signal transmitted from the microphone to an external voice recognition server (not shown) through the first communicator 250 along with a request for voice recognition service. When the voice recognition service is requested from the first controller 270 through the network 110, the voice recognition server recognizes the audio signal transmitted from the first controller 270 based on voice recognition rules of an internal recognition rule database to extract letters included in the audio signal and transmits recognition information including the extracted letters to the first controller 270. The first controller 270 displays the letters included in the received recognition information on the display 230 and simultaneously transmits a search query about the letters included in the recognition information to the information providing server 300. The information providing server 300 retrieves data corresponding to the letters from the metadata database 320 based on the letters received from the display apparatus 200 and transmits retrieved result data to the display apparatus 200.

The first communicator 250 performs communications with a second communicator 310 of the information providing server 300 through the network 110. The first communicator 250 may be configured as a wire-based/wireless communication module for connecting to the network 110. The first communicator 250 transmits a search query of the user input through the user input 240 to the information providing server 300 according to control by the first controller 270 and receives result data of the search performed based on the search query from the information providing server 300.

The storage 260 stores the firmware or OS for controlling the display apparatus 200.

The storage 260 also stores content, such as a broadcast and a VOD, reproduced on the display apparatus 200 according to a control of the first controller 270 based on a user input through the user input 240.

The storage 260 stores search result data on the search query received from the information providing server 300 and search results determined to be displayed on the display 230 by the first controller 270, which is described in detail below.

The storage 260 may be provided as at least one storage medium among a flash memory, a hard disk, a multimedia card micro type, a card memory such as an SD or XD memory, a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disc.

The first controller 270 controls overall functions of the display apparatus 200, particularly according to an input signal received from the user input 240.

When the unified search function of the OS or ASIC is executed, the first controller 270 transmits a search query about a search word input through the remote controller 241 of the user input 240 or a voice input through the microphone 245 to the information providing server 300 through the first communicator 250.

The first controller 270 classifies search result data on the search query received from the information providing server 300 into a plurality of categories based on a content type, and displays the search result data on the display 230 according to the classified categories. The first controller 270 determines a display order of the classified categories and/or a number of displayed search results of each category in view of a relevance to content currently displayed on the display 230.

In detail, if while watching a program of a particular channel currently being broadcasted, the user implements the unified search function by inputting a search word "trip" or uttering word "trip" through the remote controller 241 or microphone 245, respectively, the first controller 270 receives search result data on "trip" from the information providing server 300 and classifies the search result data into a plurality of categories based on a content type.

The categories based on the content type are categories divided according to displayed content type, such as broadcasts, games, movies, animations, music, videos, pictures, blogs, web documents, websites, applications and news.

The categories may be set in advance during the manufacture, but the user may add a new category or delete a category on a configuration screen (not shown) of the unified search function of the OS or ASIC.

Table 1 below shows the categories classified into a broadcast, a movie, a video, a blog, a web document, and news. Table 1 may be an example of a table displayed on the display, with the classified categories, or a presentation of the classified categories displayed on the display may be derived from Table 1. For example, the classified categories may be displayed on the side of the screen of the display, i.e., on the same screen which displays the content. The classified categories may be displayed separately from the displayed content or may be overplayed over the displayed content.

[Table 1]

EP 2 881 869 A1

**Classified categories of the search result data on November 26, 2013:**

| Categories (Number of search results) | Title | Creation date | URL | Total daily clicks | Total weekly clicks | Total monthly clicks | Display order determining score(K) |
|---|---|---|---|---|---|---|---|
| Broadcast (60) | Luxurious trip, if you go there now, EP. 46 | 2013-09-08 | www.imbc.com/bro ad/tv/.. | 200 | 950 | 3650 | 54 |
|  | Records of experiences, living there, EP. 46 | 2013-05-28 | www.imbc.com/bro ad/tv/.. | 150 | 840 | 3240 | 44 |
|  | Happy train all over the country, EP. 50 | 2011-08-10 | www.imbc.com/bro ad/tv/.. | 120 | 657 | 2850 | 35 |
|  | . | . | . | . | . | . |  |
|  | . | . | . | . | . | . |  |
| Movie (1) | Journey, Director Bae Chang-ho | 2010-05-20 | www.movie.naver.co./movie/bi/... | 35 | 145 | 645 | 9 |
| Video (312,932) | Mae's Seoul Tour | 2013-11-21 | Naver tvcast | 70 | - | - | 35 |
|  | Journey to music, EP. 2 | 2013-11-18 | Pandora TV | 35 | 173 | - | 12 |
|  | Kang's journey to music | 2013-11-19 | YouTube | 13 | 58 | - | 4 |
|  | . | . | . | . | . | . |  |
|  | . | . | . | . | . | . |  |
| Blog (1,186,542 ) | Great places for family trip | 2013-11-26 | dlguswn0511.blog.me/.. | 8 | - | - | 4 |
|  | Materials for trip to the USA | 2013-11-24 | blog.naver.com/ksksks909/.. | 4 | - | - | 2 |
|  | Trip to Jejudo in winter | 2013-11-20 | blog.naver.com/bg9010/.. | 3 | 21 | - | 1 |
|  | . | . | . | . | . | . |  |
|  | . | . | . | . | . | . |  |
| Web document (6,971,191) | Recommended spots on the south coast | 2013-01-19 | www.2013expo.or.kr//c=8/.. | 750 | 4200 | 18390 | 225 |
|  | Scenic road | 2013-11-24 | www.cj100.net/tour/.. | 250 | 1600 | 4840 | 75 |
|  | Green tea tour of Hadong | 2013-11-20 | greentea.go.kr/03_tour/.. | 205 | 1400 | 4560 | 64 |

| Classified categories of the search result data on November 26, 2013: | | | | | | | |
|---|---|---|---|---|---|---|---|
| Categories (Number of search results) | Title | Creation date | URL | Total daily clicks | Total weekly clicks | Total monthly clicks | Display order determining score(K) |
| | . | . | . | . | . | . | |
| | . | . | . | . | . | . | |
| News (1,123,852) | Backpack trip with beautiful girls | 2013-11-26 | www.hani.co.kr/arti/.. | 12500 | - | - | 6250 |
| | Roaming service by travelling type | 2013-11-26 | www.acrofan.com/ko-kr/.. | 8020 | - | - | 4010 |
| | Ten hot spring spots with theme in winter | 2013-11-26 | www.sports.chosun.com/news/... | 7800 | - | - | 3900 |
| | . | . | . | | | | |
| | . | . | . | | | | |

EP 2 881 869 A1

The first controller 270 displays a 'broadcast' category related to a broadcast program, which is content being currently displayed on the display 230, on the top. The first controller 270 assigns to display search results of the 'broadcast' category as many as a first percentage (%) of a total number of search results preset to be displayed on the display 230 to one-time search.

In the present exemplary embodiment, only fifty search results of the 'broadcast' category that is 50% of a total number of search results, for example, 100, preset to be displayed on the display 230 to one-time search, may be displayed.

Among the search results of the 'broadcast' category, search results other than the fifty search results allowed to be displayed on the display 230 may be configured to be displayed when a 'show more' tab is executed. The user may click the 'show more' tab to identify more search results on a separate window.

An order of displaying the fifty search results determined to be displayed in the 'broadcast' category is determined based on a display determining parameter. The display determining parameter may include popularity and/or recency.

The first controller 270 may determine the display order based on a display order determining score (K) calculated by Equation (1) considering the popularity and the recency as the display determining parameter.

$$K = \frac{(D \times \alpha) + (\frac{W}{7} \times \beta) + (\frac{M}{30} \times \gamma)}{A - B}$$

(here, α>β>γ) … (1)

Here, D is a total number of daily clicks on each search result,

α is a daily weighting,

W is a total number of weekly clicks on each search result,

β is a weekly weighting,

M is a total number of monthly clicks on each search result,

γ is a monthly weighting,

A is a number of applied click types, and

B is a number of unapplied click types.

In Equation (1), the daily weighting α, the weekly weighting β and the monthly weighting γ may be set to 0.5, 0.3 and 0.2, respectively, to apply a higher score to a most recent search result.

The total number of daily clicks refers to a total number of clicks on a latest day, the total number of weekly clicks to a total number of clicks in a latest week, and the total number of monthly clicks to a total number of clicks in a latest month. Alternatively, the total number of daily clicks, the total number of weekly clicks and the total number of monthly clicks may be an average number of daily clicks, an average number of weekly clicks and an average number of monthly clicks, respectively.

The click types refer to a daily click, a weekly click and a monthly click.

In the present exemplary embodiment, the user implements the unified search function while watching a broadcast program, but is not limited thereto. That is, when the user implements the unified search function while watching different content, for example, a video on YouTube, the first controller 270 may display a 'video' category on top and display fifty search results of the 'video' category on the display 230.

Because the category displayed on the top and/or the number of displayed search results of the category are determined in view of a current viewing situation of the user, i.e., display of a broadcast program, search results that the user is more likely to be interested in or needs, may be provided to the user with better availability for selection, visibility and convenience.

For example, the first controller 270 may control the display 230 to display a category 'movie' and a category 'video' after a category 'broadcast,' in an order of relevance to the content currently being watched by a user. As another example, the first controller 270 may control the display 230 to display categories other than the 'broadcast' category in an order of a higher ratio of search results of the categories to a total number of search results. As indicated in Table 1, the ratios of search results of the categories are high in order of web documents, blogs, news, videos and movies. Thus, the first controller 270 may display the other categories in order of web documents, blogs, news, videos and movies. As another example, the first controller 270 may control the display 230 to display a category 'movie' and a category 'video' after a category 'broadcast,' and then to display the other categories in an order of a higher ratio of search results of the categories to a total number of search results, i.e., in an order of web documents, blogs, and news.

The first controller 270 assigns to display, on the display 230, search results of each of the other categories as many as a second percentage (%) of the total number of search results preset to be displayed on the display 230. In the present exemplary embodiment, the second percentage is 10% obtained by dividing the remaining 50% equally by the other five categories. For example, among one hundred search results in total, ten search results are displayed for each category. Similarly to the 'broadcast' category, search results of each of the other categories other than ten search results allowed to be displayed on the display 230 may be configured to be displayed when a 'show more' tab is executed.

In the same manner as the order of displaying the fifty search results of the 'broadcast' category displayed on top, an order of displaying the ten search results determined to be displayed in each of the other categories is determined based on the display determining parameter. The same determining method as used for the 'broadcast' category is employed, and thus description thereof is omitted herein.

In Table 1, a 'movie' category has one search result, which is smaller than an allocation of ten search results to be displayed on the display 230. In this case, the display 230 has spare spaces for displaying nine search results, which are not occupied in the 'movie' category. Thus, the first controller 270 divides the unoccupied spaces for nine search results based on a ratio of search results of each of the other categories and a total number of search results, to calculate an additional allocation for each of the other categories and assigns the allocation to each of the other categories, thereby displaying nine search results on the display 230 for the other categories. That is, among the unoccupied spaces for nine search results, no space (9 x 60 / 9,594,578 = 0.000056) is allocated to the 'broadcast' category, no space (9 x 312,932 / 9,594,578 = 0.29) to the 'video' category, one space (9 x 1,186,542 / 9,594,578 = 1.1) to the 'blog' category, seven spaces (9 x 6,971,191 / 9,594,578 = 6.53) to the 'web document' category, and one space (9 x 1,123,852 / 9,594,578 = 1.05) to the 'news' category on the display 230.

The present exemplary embodiment is described such that the first controller 270 classifies only search result data received from the information providing server 300 according to the foregoing method to display the search result data on the display 230, but is not limited thereto. For example, the first controller 270 may classify and display contents stored in the storage 260, such as broadcast programs and VODs, in addition to the search result data received from the information providing server 300. The contents stored in the storage 260 may be set to be displayed in classified categories prior to search results of search result data.

The first controller 270 includes a central processor (CPU), and may execute a firmware or OS programmed to control operations of the components and a category classification operation of classifying the foregoing categories and determining a category display order and a number of displayed search results in each category and operate the operations.

The first controller 270 may further include a volatile memory, for example, a DDR, to load at least part of the stored firmware or OS for the CPU to conduct quick access.

Alternatively, the first controller 270 may be configured to include the ASIC designed to embed a program for controlling the category classification operation separately from the OS, instead of being configured to program the firmware or OS to control the category classification operation.

FIG. 3 is a block diagram illustrating the information providing server 300 according to an exemplary embodiment.

The information providing server 300 is a server providing a search service to the display apparatus 200 connected to the network 110, which analyzes a search query received from the display apparatus 200 to retrieve data corresponding to the search query according to a predetermined algorithm and transmits retrieved search result data to the display apparatus 200.

The information providing server 300 may be connected to a plurality of display apparatuses 200 and is configured as servers operated by a display apparatus manufacturer and/or a content provider.

Referring to FIG. 3, the information providing server 300 includes the second communicator 310, the metadata database 320, a data storage 330 and the second controller 340.

The second communicator 310 conducts communications with the first communicator 250 of the display apparatus 200 through the network 110 and may be configured as a wire-based and/or wireless communication module for connecting to the network 110. The second communicator 310 receives a search query of the user input through the user input 240 from the first communicator 250 of the display apparatus 200 and transmits search result data retrieved corresponding to the search query to the first communicator 250 according to a control of the second controller 340.

The metadata database 320 stores metadata on various fields of content. The metadata stored in the metadata database 320 is updated on a cycle.

The data storage 330 stores data and may be provided as at least one storage medium among a flash memory, a hard disk, a multimedia card micro type, a card memory such as an SD or XD memory, an RAM, an SRAM, an ROM, an EEPROM, a PROM, a magnetic memory, a magnetic disk, and an optical disc.

The second controller 340 analyzes a search query of the user to retrieve data corresponding to the search query from the metadata database 320 according to a preset algorithm and stores retrieved search result data in the data storage 330.

The second controller 340 transmits the retrieved search result data to the first communicator 250 through the second communicator 310.

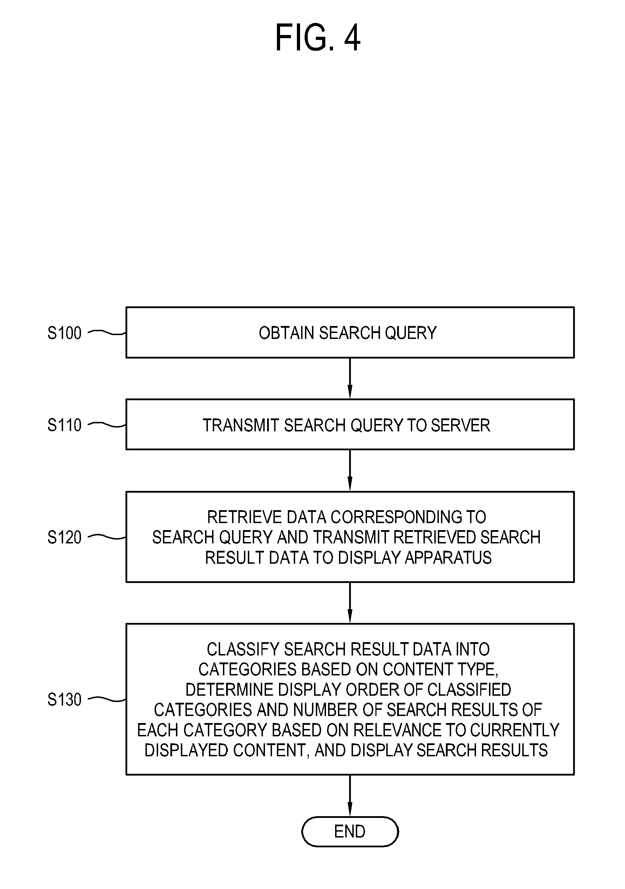

Hereinafter, a search result providing process of the display system 100 with the foregoing configuration will be described with reference to FIG. 4.

First, the user implements the unified search function and inputs a search word or voice, for example, 'trip,' through the remote controller 241 or the microphone 245 of the user input 240 of the display apparatus 200 while watching a broadcast program (operation S100).

Then, the first controller 270 transmits a search query including the input search word or letters 'trip' recognized by an external voice recognition server to the second communicator 310 of the information providing server 300 through the first communicator 250 (operation S110).

The second controller 340 of the information providing server 300 analyzes the search query received from the display apparatus 200 to retrieve data corresponding to the search query, transmits retrieved search result data to the first communicator 250 of the display apparatus 200 through the second communicator 310, and stores the search result data in the data storage 330 (operation S120).

As described above with reference to Table 1, the first controller 270 classifies the search result data on the search query received from the information providing server 300 into a plurality of categories based on a content type, for example, broadcasts, blogs, web documents, news, videos and movies, and displays the search result data according to the classified categories (operation S130).

The first controller 270 determines a display order of the classified categories and/or a number of displayed search results of each category in view of a relevance to a broadcast program such as a content currently displayed on the display 230.

That is, the first controller 270 displays the 'broadcast' category related to the displayed broadcast program among the categories on the top and displays search results of the category as many as the first percentage (%) of the total number of search results preset to be displayed on the display 230, for example, 50% of one hundred search results in total, that is, fifty search results. The first controller 270 determines a display order within the displayed search results of the 'broadcast' category based on a display determining parameter including popularity and recency and displays the search results in the determined order on the display 230.

Further, the first controller 270 displays other categories, that is, blogs, web documents, news, videos and movies, in order of higher ratios of search results of the categories to a total number of search results. The first controller 270 displays, on the display 230, search results of each of the other categories as many as a second percentage (%) of the total number of search results preset to be displayed on the display 230. The second percentage is, for example, 10% obtained by dividing the remaining 50% equally by the other five categories. That is, among one hundred search results in total, ten search results are displayed for each of the other categories. Here, similarly to the 'broadcast' category, the first controller 270 determines a display order of the displayed search results of the other categories based on a display determining parameter including popularity and recency and displays the search results in the determined order on the display 230.

When a number of search results of a category is smaller than a number of search results allocated for the category to be displayed on the display 230, the first controller 270 multiplies an insufficient number of search results by a ratio between the search results of each of other categories and a total number of the search results to calculate an allocation for each of the other categories and further assigns the allocation for each of other categories thereto, thereby displaying search results as many as the insufficient number for the other categories.

As such, since the search result data corresponding to the search query input by the user is classified into the plurality of categories based on the content type, and the display order of the categories and/or the number of displayed search results of each category are displayed in view of a current viewing situation of the user, the user may easily find desired content.

As described above, according to the display apparatus 200, the display system 100 and the search result providing method of the same, when the search result data corresponding to the search query input by the user is received from the information providing server 300 and displayed on the display 230 of the display apparatus 200, the search result data is classified into the plurality of categories based on the content type, the display order of the classified categories and the number of displayed search results of each category are determined in view of the relevance to the content currently displayed on the display 230, and the search results of each category are displayed on the display 230 based on the determined result. As a result, the category displayed on the top and/or the number of displayed search results of the category may be determined in view of the current viewing situation of the user. Thus, content that the user is more likely to be interested in or may need to be provided, is prioritized to be displayed on the top, and, accordingly, the user may easily find desired content.

The foregoing exemplary embodiments and advantages are merely exemplary and are not to be construed as limiting. The present teaching can be readily applied to other types of apparatuses. The description of the exemplary embodiments is intended to be illustrative, and not to limit the scope of the claims, and many alternatives, modifications, and variations will be apparent to those skilled in the art. For example, each single component may be separated into multiple components which are then separately implemented. Also, separated components may be combined together and implemented as a single component.

**Claims**

1.  A display apparatus comprising:

    a display configured to display an image of content;
    a user input configured to receive a user input; and
    a controller configured to transmit a search query input through the user input to a server, to classify search result data on the search query received from the server into categories based on a content type and to display search results on the display according to the classified categories,
    wherein the controller is further configured to determine at least one of a display order of the classified categories and a number of displayed search results of each category based on a relevance to the content currently displayed on the display.

2.  The display apparatus of claim 1, wherein the user input comprises at least one of a microphone to input a voice of a user and a remote controller to receive a remote control signal corresponding to a key input by the user.

3.  The display apparatus of claim 1, wherein the categories comprise at least two of a broadcast, a game, a movie, an animation, a music, a video, a picture, an application, a website, a web document, and news.

4.  The display apparatus of claim 1, wherein the controller is further configured to control the display to display a first category related to the content currently displayed on the display, among the classified categories, on an upper portion of a screen, and
    to control the display to display a number of the search results of the first category as allocated by a first percentage of a preset number of the search results to be displayed on the display.

5.  The display apparatus of claim 4, wherein the controller is further configured to control the display to display second categories of the classified categories, which are different from the first category, in an order of a higher ratio between the search results of respective second categories and a total number of the search results of the search result data, and to display a number of the search results of the second categories as allocated by a second percentage of the preset number of the search results,
    an allocation for displaying the search results for each of the second categories is obtained by dividing the second percentage by a number of the second categories, and
    the second percentage is a difference between the first percentage and 100%.

6.  The display apparatus of claim 5, wherein the first percentage is set to be higher than the second percentage.

7.  The display apparatus of claim 5, wherein the controller is further configured to determine a display order of the search results of the second categories based on a display determining parameter to display the search results.

8.  The display apparatus of claim 7, wherein the display determining parameter comprises at least one of a popularity and a recency.

9.  The display apparatus of claim 8, wherein the controller is further configured to determine the display order based on a display order determining score (K) calculated by a following equation, as the display determining parameter:

$$K = \frac{(D \times \alpha) + (\frac{W}{7} \times \beta) + (\frac{M}{30} \times \gamma)}{A - B}$$  (here, α>β>γ)

    where D is a total number of daily clicks on each search result,
    α is a daily weighting,
    W is a total number of weekly clicks on each search result,
    β is a weekly weighting,
    M is a total number of monthly clicks on each search result,
    γ is a monthly weighting,

A is a number of applied click types, and
B is a number of unapplied click types.

10. The display apparatus of claim 5, wherein, in response to a first number of the search results of one category of the classified categories being smaller by a second number than a number of the search results allocated for the one category to be displayed on the display based on the first percentage or the second percentage, the controller is further configured to multiply the second number by a ratio between the search results of each of other categories and the total number of the search results, to calculate an additional allocation for each of the other categories, and is further configured to assign the additional allocation for each of the other categories to a previously determined allocation, to display the search results on the display, and
wherein the other categories are categories of the classified categories which are different from the one category.

11. A search result providing method of a display apparatus, the method comprising:

inputting a search query of a user;
transmitting the input search query to a server;
classifying search result data on the search query received from the server into categories based on a content type; and
displaying search results according to the classified categories,
wherein the displaying comprises determining at least one of a display order of the classified categories and a number of displayed search results of each category based on a relevance to a content currently displayed.

12. The method of claim 11, wherein the displaying further comprises:

displaying a first category related to the content currently displayed, among the classified categories, on an upper portion of a screen; and
displaying a number of the search results of the first category as allocated by a first percentage of a preset number of the search results to be displayed.

13. The method of claim 12, wherein the displaying further comprises:

displaying second categories, of the classified categories, which are different from the first category, in an order of a higher ratio between the search results of respective second categories and a total number of the search results of the search result data; and
displaying a number of the search results of the second categories as allocated by a second percentage of the preset number of the search results,
wherein an allocation for displaying the search results for each of the second categories is obtained by dividing the second percentage by a number of the second categories, and
the second percentage is a difference between the first percentage and 100%.

14. A display system comprising:

a server comprising a metadata database configured to store metadata on content and a first controller configured to retrieve data corresponding a search query of a user from the metadata database; and
a display apparatus according to any of claims 1 to 10 comprising a second controller configured to transmit the search query of the user to the server, to classify search result data received from the server into categories based on a content type, and to display the search result data on a display according to the classified categories,
wherein the second controller is configured to determine at least one of a display order of the classified categories and a number of displayed search results of each category based on a relevance to a content currently displayed on the display.

15. A search result providing method of a display system according to claim 14, comprising:

receiving an input of a search query of a user;
transmitting the input search query to a server;
retrieving data corresponding to the search query and transmitting search result data to a display; and
classifying the search result data into categories based on a content type and displaying the search result data according to the classified categories,

wherein the displaying comprises determining at least one of a display order of the classified categories and a number of displayed search results of each category based on a relevance to a content currently displayed on a display.

# FIG. 1

# FIG. 2

200

210 — SIGNAL RECEIVER

220 — IMAGE PROCESSOR

230 — DISPLAY

235 — AUDIO PROCESSOR — SPK

NETWORK

250 — FIRST COMMUNICATOR

270 — FIRST CONTROLLER

240 — USER INPUT

241 — REMOTE CONTROLLER

243 — KEY INPUT

245 — MICROPHONE

INFORMATION PROVIDING SERVER

260 — STORAGE

EP 2 881 869 A1

16

# FIG. 3

300

340    320

310

NETWORK ⟷ SECOND COMMUNICATOR ⟷ SECOND CONTROLLER ⟷ METADATA BASE

SECOND CONTROLLER ⟷ DATA STORAGE

330

DISPLAY APPARATUS — 100

# FIG. 4

| S100 | OBTAIN SEARCH QUERY |
|---|---|

| S110 | TRANSMIT SEARCH QUERY TO SERVER |
|---|---|

| S120 | RETRIEVE DATA CORRESPONDING TO SEARCH QUERY AND TRANSMIT RETRIEVED SEARCH RESULT DATA TO DISPLAY APPARATUS |
|---|---|

| S130 | CLASSIFY SEARCH RESULT DATA INTO CATEGORIES BASED ON CONTENT TYPE, DETERMINE DISPLAY ORDER OF CLASSIFIED CATEGORIES AND NUMBER OF SEARCH RESULTS OF EACH CATEGORY BASED ON RELEVANCE TO CURRENTLY DISPLAYED CONTENT, AND DISPLAY SEARCH RESULTS |
|---|---|

END

**EP 2 881 869 A1**

Europäisches
Patentamt
European
Patent Office
Office européen
des brevets

# EUROPEAN SEARCH REPORT

Application Number

EP 14 19 1758

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/010268 A1 (LIAO CIYA [US] ET AL) 10 January 2008 (2008-01-10) * paragraphs [0029] - [0030], [0034], [0062] - [0063]; figures 1,3 * | 1-15 | INV. G06F17/30 |
| A | US 2008/065685 A1 (FRANK JOHN R [US]) 13 March 2008 (2008-03-13) * paragraphs [0018] - [0025] * | 1-15 | |
| A | RAWAL A ET AL: "Exploiting Confusion Matrices for Relevance Ranking of Text Documents", EMERGING TRENDS IN ENGINEERING AND TECHNOLOGY, 2008. ICETET '08. FIRST INTERNATIONAL CONFERENCE ON, IEEE, PISCATAWAY, NJ, USA, 16 July 2008 (2008-07-16), pages 492-497, XP031292201, ISBN: 978-0-7695-3267-7 * the whole document * | 1-15 | |

TECHNICAL FIELDS SEARCHED (IPC)

G06F

The present search report has been drawn up for all claims

| Place of search | Date of completion of the search | Examiner |
|---|---|---|
| Berlin | 19 March 2015 | Moon, Timothy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19

ANNEX TO THE EUROPEAN SEARCH REPORT
ON EUROPEAN PATENT APPLICATION NO.

EP 14 19 1758

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2015

| Patent document cited in search report | | Publication date | Patent family member(s) | Publication date |
|---|---|---|---|---|
| US 2008010268 | A1 | 10-01-2008 | NONE | |
| US 2008065685 | A1 | 13-03-2008 | NONE | |

EPO FORM P0459

For more details about this annex : see Official Journal of the European Patent Office, No. 12/82